# EUROPEAN PATENT APPLICATION

(11) **EP 4 712 639 A1**
(43) Date of publication of application: **18.03.2026**
(21) Application number: 23936165.2
(22) Date of filing: 11.05.2023
(51) Int. Cl.: H04W 72/12

(54) **INFORMATION PROCESSING METHOD AND APPARATUS, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2023/093699
(87) International publication number: WO 2024/229851

(57) **Abstract**

Provided in the embodiments of the present disclosure are an information processing method and apparatus, and a storage medium. The information processing method is executed by a network device, and comprises: sending a first message to a terminal, wherein the first message instructs the terminal to send a buffer status report (BSR) according to a first-type BSR table or a second-type BSR table. In the method provided in the present disclosure, the type of a BSR table which is used for BSR reporting of a terminal side can be directly indicated by a network device side, such that when sending a BSR, a terminal can clearly learn about which BSR table of a first-type BSR table and a second-type BSR table is to be used so that a more accurate buffer data volume range can be reported to a network device, so as to facilitate the network device in allocating a suitable number of resources to the terminal, thereby reducing situations of resource waste and/or insufficient resource allocation due to the fact that a buffer data volume range of BSR reporting is inaccurate.

## Description

### TECHNICAL FIELD

The disclosure relates to, but not limited to, the field of wireless communication technology, and in particular to methods and devices for processing information and related storage media.

### BACKGROUND

In order to facilitate a network device to schedule resources for a terminal, the amount (or size) of uplink data to be sent may be reported to the network device by triggering the terminal to report a buffer status report (BSR). The types of BSR tables reported by the terminal include at least: a short-format BSR table and a long-format BSR table.

With the continuous development of wireless cellular communication technology, especially the fifth generation mobile communication (5G) technology, it has gradually become feasible to use cellular communication technology to support big data services (such as extended reality (XR) services), and the size of uplink data transmitted by the terminal is also increasing.

### SUMMARY

Embodiments of the disclosure provide methods and devices for processing information and related storage media.

A first aspect of an embodiment of the disclosure provides a method for processing information, performed by a network device, including:
sending a first message to a terminal, in which the first message is used for instructing the terminal to send a buffer status report (BSR) based on a first type of BSR table or a second type of BSR table.

A second aspect of an embodiment of the disclosure provides a method for processing information, performed by a terminal, including:
receiving a first message sent by a network device, in which the first message is used for instructing the terminal to send a buffer status report (BSR) based on a first type of BSR table or a second type of BSR table.

A third aspect of an embodiment of the disclosure provides a network device, including:
a sending module configured to send a first message to a terminal, in which the first message is used for instructing the terminal to send a buffer status report (BSR) based on a first type of BSR table or a second type of BSR table.

A fourth aspect of an embodiment of the disclosure provides a terminal, including:
a receiving module configured to receive a first message sent by a network device, in which the first message is used for instructing the terminal to send a buffer status report (BSR) based on a first type of BSR table or a second type of BSR table.

A fifth aspect of an embodiment of the disclosure provides a system for processing information, including:
a network device configured to send a first message to a terminal, in which the first message is used for instructing the terminal to send a buffer status report (BSR) based on a first type of BSR table or a second type of BSR table; and
a terminal configured to receive the first message sent by a network device.

A sixth aspect of an embodiment of the disclosure provides a communication device, including a processor, a transceiver, a memory, and an executable program stored in the memory and capable of being run by the processor, in which the processor is configured to perform the method for processing information according to the first or second aspect when running the executable program.

A seventh aspect of an embodiment of the disclosure provides a computer storage medium, which stores an executable program, in which after the executable program is executed by a processor, the method for processing information according to the first aspect or the second aspect is performed.

In the embodiments of the disclosure, the first message is sent to the terminal by the network device, to instruct the terminal through the first message to send the BSR based on the first type of BSR table or the second type of BSR table when sending the BSR. In this way, the network device side may directly indicate the type of BSR table used for BSR reporting on the terminal side, such that when sending the BSR, the terminal may clearly know which type of BSR table from the first type of BSR table and the second type of BSR table to use, so as to report a more accurate buffer size range to the network device, thereby facilitating the network device to allocate an appropriate amount of resources to the terminal, and reducing resource waste and/or insufficient resource allocation caused by inaccurate buffer size range reported by the BSR.

The technical solution according to the embodiments of the disclosure should be understood that the above general description and the following detailed description are merely illustrative and explanatory and cannot limit the embodiments of the disclosure.

### BRIEF DESCRIPTION OF THE DRAWINGS

The accompanying drawings herein are incorporated in and constitute a part of the specification, illustrate embodiments consistent with the disclosure, and together with the description, serve to explain the principles of the embodiments of the disclosure.
FIG. 1 is a schematic structural diagram of a wireless communication system according to an example embodiment.
FIG. 2 is a first flowchart of a method for processing information according to an example embodiment.
FIG. 3 is a schematic diagram illustrating the structure of a first information field according to an example embodiment.
FIG. 4 is a second flowchart of a method for processing information according to an example embodiment.
FIG. 5 is a third flowchart of a method for processing information according to an example embodiment.
FIG. 6 is a fourth flowchart of a method for processing information according to an example embodiment.
FIG. 7 is a fifth flowchart of a method for processing information according to an example embodiment.
FIG. 8 is a sixth flowchart of a method for processing information according to an example embodiment.
FIG. 9 is a seventh flowchart of a method for processing information according to an example embodiment.
FIG. 10 is an eighth flowchart of a method for processing information according to an example embodiment.
FIG. 11 is a first schematic diagram illustrating a medium access control sub-protocol data unit (MAC sub-PDU) according to an example embodiment.
FIG. 12 is a second schematic diagram illustrating a MAC sub-PDU according to an example embodiment.
FIG. 13 is a schematic diagram illustrating the structure of a network device according to an example embodiment.
FIG. 14 is a schematic diagram illustrating the structure of a network device according to an example embodiment.
FIG. 15 is a schematic diagram illustrating the structure of user equipment (UE) according to an example embodiment.
FIG. 16 is a schematic diagram illustrating the structure of a communication device according to an example embodiment.

### DETAILED DESCRIPTION

Example embodiments will be described in detail herein, examples of which are shown in the accompanying drawings. When the following description refers to the drawings, unless otherwise indicated, the same numbers in different drawings represent the same or similar elements. The embodiments described in the following example embodiments do not represent all embodiments consistent with the embodiments of the disclosure. Instead, they are merely examples of devices and methods consistent with some aspects of the embodiments of the disclosure.

The terms used in the embodiments of the disclosure are only for the purpose of describing specific embodiments, and are not intended to limit the embodiments of the disclosure. The singular forms of "a/an", "said", and "the" used in the disclosure are also intended to include plural forms, unless the context clearly indicates other meanings. It should also be understood that the term "and/or" used in this article refers to and includes any or all possible combinations of one or more associated listed items.

It should be understood that although the terms "first", "second", "third", etc. may be used to describe various information in the disclosed embodiments. These information should not be limited to these terms. These terms are only used to distinguish the same type of information from each other. For example, without departing from the scope of the embodiments, the first information may also be referred to as the second information, and similarly, the second information may also be referred to as the first information. Depending on the context, the word "if" as used herein may be interpreted as "at the time of", "when" or "in response to determining".

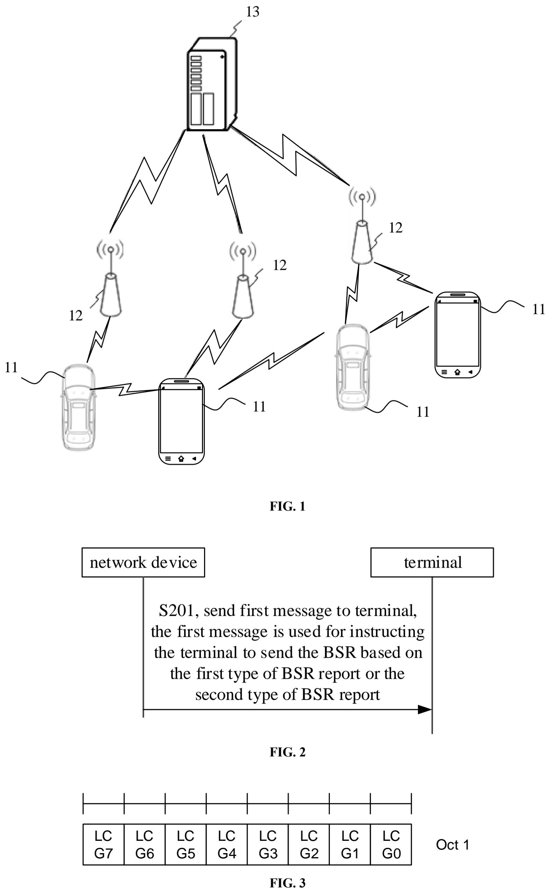

FIG. 1 is a schematic diagram of the structure of a wireless communication system according to an embodiment of the disclosure. As illustrated in FIG. 1, the wireless communication system is a communication system based on cellular mobile communication technology, and the wireless communication system may include: a plurality of user equipment (UEs) 11, a plurality of access devices 12, and a plurality of core network devices 13.

UE 11 may be a device that provides voice and/or data connectivity to users. UE 11 may communicate with one or more core networks via a radio access network (RAN). UE 11 may be an Internet of Things UE, such as a sensor device, a mobile phone (or a "cellular" phone), or a computer with an Internet of Things UE. For example, UE 11 may be a fixed, portable, pocket-sized, handheld, computer-built-in, or vehicle-mounted device, such as, a station (STA), a subscriber unit, a subscriber station, a mobile station, a mobile station, a remote station, an access point, a remote UE (remote terminal), an access terminal, a user terminal, a user agent, a user device, or a user equipment (UE). UE 11 may also be a device of an unmanned aerial vehicle. UE 11 may also be a vehicle-mounted device, for example, UE 11 may be a driving computer with wireless communication function, or a wireless communication device connected to an external driving computer. UE 11 may also be a roadside device, for example, a street lamp, a signal lamp or other roadside device with a wireless communication function.

The access device 12 may be a network-side device in a wireless communication system. The wireless communication system may be a fourth generation mobile communication technology (4G) system, also known as a long term evolution (LTE) system. The wireless communication system may be a 5G system, also known as a new radio (NR) system or a 5G NR system. The wireless communication system may be the next generation system of the 5G system. The access network in the 5G system may be referred to as New Generation-Radio Access Network (NG-RAN) or an MTC system.

The access device 12 may be an evolved access device (eNB) adopted in a 4G system. The access device 12 may also be an access device (gNB) adopting a centralized distributed architecture in a 5G system. When the access device 12 adopts the centralized distributed architecture, it usually includes a centralized unit (CU) and at least two distributed units (DU). The centralized unit is provided with a protocol stack of a packet data convergence protocol (PDCP) layer, a radio link layer control protocol (RLC) layer, and a media access control (MAC) layer. The distributed unit is provided with a physical (PHY) layer protocol stack. The specific implementation of the access device 12 is not limited in the embodiment of the disclosure.

A wireless connection may be established between the access device 12 and the UE 11 through a wireless air interface. In different implementations, the wireless air interface is a wireless air interface based on the 4G standard, the wireless air interface is a wireless air interface based on the 5G standard, for example, the wireless air interface is a new air interface, or the wireless air interface may be a wireless air interface based on the next generation mobile communication network technology standard of 5G.

The entities illustrated in FIG1 are examples. The embodiments or examples of the disclosure may include all or part of the entities in FIG. 1, or may include other entities other than FIG. 1. The number of entities is arbitrary and is not limited to FIG. 1. The connection relationships illustrated in FIG1 are examples. Any entities may be connected or disconnected, and the connection may be in any manner, which may be direct or indirect, and may be wired or wireless.

The embodiments or examples of the disclosure are not exhaustive, but are only illustrative of some embodiments or examples, and are not intended to be specific limitations on the scope of protection of the disclosure. In the absence of contradiction, each step in a certain embodiment or example may be implemented as an independent example, and the steps may be combined arbitrarily. For example, the scheme after removing some steps in a certain embodiment or example may also be implemented as an independent example, and the order of the steps in a certain embodiment or example may be arbitrarily exchanged. In addition, the optional methods or optional examples in a certain embodiment or example may be combined arbitrarily. In addition, the various embodiments or examples may be combined arbitrarily. For example, some or all steps of different embodiments or examples may be combined arbitrarily, and a certain embodiment or example may be combined arbitrarily with the optional methods or optional examples of other embodiments or examples.

As the size of data to be transmitted by the terminal increases dramatically, the terminal cannot report an accurate buffer size range to the network device based on a short-format BSR table and/or a long-format BSR table, resulting in waste of resources reserved by the network device for the terminal. In order to reduce the above-mentioned waste of resources, a new BSR table is introduced into the network. However, in the process of the terminal actually reporting the BSR, how to select among the short-format BSR table, the long-format BSR table and the new BSR table to make the buffer size range reported by the terminal to the network device more accurate and reduce resource waste and/or insufficient resource allocation to a greater extent is a problem to be solved.

FIG. 2 is a first flowchart of a method for processing information according to an example embodiment. As illustrated in FIG. 2, an embodiment of the disclosure provides a method for processing information performed by a network device. The method includes the following.

At step S201, first message is sent to a terminal. The first message is used for instructing the terminal to send a buffer status report (BSR) based on a first type of BSR table or a second type of BSR table.

The network device involved in the embodiments of the disclosure may be a base station or other equipment on the network side, for example, it may be but not limited to at least one of the following: 3G base station, 4G base station, 5G base station and other evolved base stations. The terminal may be UE, etc., for example, it may be but not limited to a mobile phone, a computer, a server, a wearable device, a game control platform or a multimedia device, etc.

In the embodiments of the disclosure, the network device sends the first message to the terminal, such that after receiving the first message, the terminal determines, based on the first message, whether to use the first type of BSR table or to use the second type of BSR table to send the BSR.

It should be noted that uplink wireless resources used by the terminal to transmit uplink data may be allocated by the network device. When the terminal has data to send, the terminal may send a BSR to the network device. The BSR indicates a size of data to be transmitted by the terminal. The network device may allocate uplink resources to the terminal based on the BSR sent by the terminal. The terminal may send uplink data to the network device based on the uplink resources allocated by the network device.

In an embodiment, the network device may send the first message to the terminal in a unicast manner, a multicast manner or a broadcast manner.

It may be understood that in the case where the number of terminals connected to the network device is small, or where a difference between the service data transmitted by multiple terminals connected to the network device is large, the network device may send the first message to each terminal separately via the unicast manner to notify the terminals to use the first type of BSR table or the second type of BSR table to send BSR.

In a case where business data transmitted by multiple terminals connected to the network device are the same or similar, for example, multiple terminals of the network device transmit video data, the network device may broadcast the first message to the multiple terminals in the network to notify the multiple terminals in the network to use the first type of BSR table or the second type of BSR table to send BSR.

In a case where at least two of the multiple terminals connected to the network device transmit the same or similar business data, the network device may assign the at least two terminals with the same or similar business data to one group and send the first message to the at least two terminals in the group via the multicast manner.

The BSR may include: an identifier field and a buffer size field of a logical channel group. There are four formats for the BSR sent by the terminal, namely: short BSR, short truncated BSR, long BSR and long truncated BSR. In the short BSR and in the short truncated BSR, the identifier field of the logical channel group occupies 3 bits and the buffer size field of the logical channel group occupies 5 bits, and a BSR value or a BS value index of one logical channel group may only be carried. In the long BSR and the long truncated BSR, the cache size field occupies 8 bits, and BSR values or BS value indexes of multiple logical channel groups may be carried.

The BSR table is used for describing a correspondence between buffer size ranges (i.e., the BS values) and indexes. The correspondence between buffer size ranges (i.e., the BS values) and indexes described by the first type of BSR table is different from the correspondence between buffer size ranges (i.e., the BS values) and indexes described by the second type of BSR table.

In an embodiment, the first type of BSR table may include: a first-type BSR table in a short format and a first-type BSR table in a long format.

As shown in Table 1, Table 1 is a first-type BSR table in a short format. The first-type BSR table in a short format is used for describing the correspondence between 5-bit indexes and BS values.

**Table 1**

| index | BS value | index | BS value | index | BS value | index | BS value |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

**As** shown in Table 2, Table 2 is a first-type BSR table in a long format. The first-type BSR table in a long format is used for describing the correspondence between 8-bit indexes and BS values.

**Table 2**

| index | BS value | index | BS value | index | BS value | index | BS value |
|---|---|---|---|---|---|---|---|
| 0 | 0 | 64 | ≤ 560 | 128 | ≤ 31342 | 192 | ≤ 1754595 |
| 1 | ≤ 10 | 65 | ≤ 597 | 129 | ≤ 33376 | 193 | ≤ 1868488 |
| 2 | ≤ 11 | 66 | ≤ 635 | 130 | ≤ 35543 | 194 | ≤ 1989774 |
| 3 | ≤ 12 | 67 | < 677 | 131 | ≤ 37850 | 195 | ≤ 2118933 |
| 4 | ≤ 13 | 68 | ≤ 720 | 132 | ≤ 40307 | 196 | ≤ 2256475 |
| 5 | ≤ 14 | 69 | ≤ 767 | 133 | ≤ 42923 | 197 | ≤ 2402946 |
| 6 | ≤ 15 | 70 | ≤ 817 | 134 | ≤ 45709 | 198 | ≤ 2558924 |
| 7 | ≤ 16 | 71 | ≤ 870 | 135 | ≤ 48676 | 199 | ≤ 2725027 |
| 8 | ≤ 17 | 72 | ≤ 926 | 136 | ≤ 51836 | 200 | ≤ 2901912 |
| 9 | ≤ 18 | 73 | ≤ 987 | 137 | ≤ 55200 | 201 | ≤ 3090279 |
| 10 | ≤ 19 | 74 | ≤ 1051 | 138 | ≤ 58784 | 202 | ≤ 3290873 |
| 11 | ≤ 20 | 75 | ≤ 1119 | 139 | ≤ 62599 | 203 | ≤ 3504487 |
| 12 | ≤ 22 | 76 | ≤ 1191 | 140 | ≤ 66663 | 204 | ≤ 3731968 |
| 13 | ≤ 23 | 77 | ≤ 1269 | 141 | ≤ 70990 | 205 | ≤ 3974215 |
| 14 | ≤ 25 | 78 | ≤ 1351 | 142 | ≤ 75598 | 206 | ≤ 4232186 |
| 15 | ≤ 26 | 79 | ≤ 1439 | 143 | ≤ 80505 | 207 | ≤ 4506902 |
| 16 | ≤ 28 | 80 | ≤ 1532 | 144 | ≤ 85730 | 208 | ≤ 4799451 |
| 17 | ≤ 30 | 81 | < 1631 | 145 | ≤ 91295 | 209 | ≤ 5110989 |
| 18 | ≤ 32 | 82 | ≤ 1737 | 146 | ≤ 97221 | 210 | ≤ 5442750 |
| 19 | ≤ 34 | 83 | ≤ 1850 | 147 | ≤ 103532 | 211 | ≤ 5796046 |
| 20 | ≤ 36 | 84 | ≤ 1970 | 148 | ≤ 110252 | 212 | ≤ 6172275 |
| 21 | ≤ 38 | 85 | ≤ 2098 | 149 | ≤ 117409 | 213 | ≤ 6572925 |
| 22 | ≤ 40 | 86 | ≤ 2234 | 150 | ≤ 125030 | 214 | ≤ 6999582 |
| 23 | ≤ 43 | 87 | ≤ 2379 | 151 | ≤ 133146 | 215 | ≤ 7453933 |
| 24 | ≤ 46 | 88 | ≤ 2533 | 152 | ≤ 141789 | 216 | ≤ 7937777 |
| 25 | ≤ 49 | 89 | ≤ 2698 | 153 | ≤ 150992 | 217 | ≤ 8453028 |
| 26 | ≤ 52 | 90 | ≤ 2873 | 154 | ≤ 160793 | 218 | ≤ 9001725 |
| 27 | ≤ 55 | 91 | ≤ 3059 | *155* | ≤ 171231 | 219 | ≤ 9586039 |
| 28 | ≤ 59 | 92 | ≤ 3258 | 156 | ≤ 182345 | 220 | ≤ 10208280 |
| 29 | ≤ 62 | 93 | ≤ 3469 | 157 | ≤ 194182 | 221 | ≤ 10870913 |
| 30 | ≤ 66 | 94 | ≤ 3694 | 158 | ≤ 206786 | 222 | ≤ 11576557 |
| 31 | ≤ 71 | 95 | ≤ 3934 | 159 | ≤ 220209 | 223 | ≤ 12328006 |
| 32 | ≤ 75 | 96 | ≤ 4189 | 160 | ≤ 234503 | 224 | ≤ 13128233 |
| 33 | ≤ 80 | 97 | ≤ 4461 | 161 | ≤ 249725 | 225 | ≤ 13980403 |
| 34 | ≤ 85 | 98 | ≤ 4751 | 162 | ≤ 265935 | 226 | ≤ 14887889 |
| 35 | ≤ 91 | 99 | ≤ 5059 | 163 | ≤ 283197 | 227 | ≤ 15854280 |
| 36 | ≤ 97 | 100 | ≤ 5387 | 164 | ≤ 301579 | 228 | ≤ 16883401 |
| 37 | ≤ 103 | 101 | ≤ 5737 | 165 | ≤ 321155 | 229 | ≤ 17979324 |
| 38 | ≤ 110 | 102 | ≤ 6109 | 166 | ≤ 342002 | 230 | ≤ 19146385 |
| 39 | ≤ 117 | 103 | ≤ 6506 | 167 | ≤ 364202 | 231 | ≤ 20389201 |
| 40 | ≤ 124 | 104 | ≤ 6928 | 168 | ≤ 387842 | 232 | ≤ 21712690 |
| 41 | ≤ 132 | 105 | ≤ 7378 | 169 | ≤ 413018 | 233 | ≤ 23122088 |
| 42 | ≤ 141 | 106 | ≤ 7857 | 170 | ≤ 439827 | 234 | ≤ 24622972 |
| 43 | ≤ 150 | 107 | ≤ 8367 | 171 | ≤ 468377 | 235 | ≤ 26221280 |
| 44 | ≤ 160 | 108 | ≤ 8910 | 172 | ≤ 498780 | 236 | ≤ 27923336 |
| 45 | ≤ 170 | 109 | ≤ 9488 | 173 | ≤ 531156 | 237 | ≤ 29735875 |
| 46 | ≤ 181 | 110 | ≤ 10104 | 174 | ≤ 565634 | 238 | ≤ 31666069 |
| 47 | ≤ 193 | 111 | ≤ 10760 | 175 | ≤ 602350 | 239 | ≤ 33721553 |
| 48 | ≤ 205 | 112 | ≤ 11458 | 176 | ≤ 641449 | 240 | ≤ 35910462 |
| 49 | ≤ 218 | 113 | ≤ 12202 | 177 | ≤ 683087 | 241 | ≤ 38241455 |
| 50 | ≤ 233 | 114 | ≤ 12994 | 178 | ≤ 727427 | 242 | ≤ 40723756 |
| 51 | ≤ 248 | 115 | ≤ 13838 | 179 | ≤ 774645 | 243 | ≤ 43367187 |
| 52 | ≤ 264 | 116 | ≤ 14736 | 180 | ≤ 824928 | 244 | ≤ 46182206 |
| 53 | ≤ 281 | 117 | ≤ 15692 | 181 | ≤ 878475 | 245 | ≤ 49179951 |
| 54 | ≤ 299 | 118 | ≤ 16711 | 182 | ≤ 935498 | 246 | ≤ 52372284 |
| 55 | ≤ 318 | 119 | ≤ 17795 | 183 | ≤ 996222 | 247 | ≤ 55771835 |
| 56 | ≤ 339 | 120 | ≤ 18951 | 184 | ≤ 1060888 | 248 | ≤ 59392055 |
| 57 | ≤ 361 | 121 | ≤ 20181 | 185 | ≤ 1129752 | 249 | ≤ 63247269 |
| 58 | ≤ 384 | 122 | ≤ 21491 | 186 | ≤ 1203085 | 250 | ≤ 67352729 |
| 59 | ≤ 409 | 123 | ≤ 22885 | 187 | ≤ 1281179 | 251 | ≤ 71724679 |
| 60 | ≤ 436 | 124 | ≤ 24371 | 188 | ≤ 1364342 | 252 | ≤ 76380419 |
| 61 | ≤ 464 | 125 | ≤ 25953 | 189 | ≤ 1452903 | 253 | ≤ 81338368 |
| 62 | ≤ 494 | 126 | ≤ 27638 | 190 | ≤ 1547213 | 254 | > 81338368 |
| 63 | ≤ 526 | 127 | ≤ 29431 | 191 | ≤ 1647644 | 255 | reserved |

It may be seen from Table 1 and Table 2 that a BS value range represented by each index is different in size. The smaller the index, the smaller the corresponding BS value range, that is the more accurate the buffer size reported by the BSR. Conversely, the larger the index, the larger the corresponding BS value range, that is, the rougher the buffer size reported by the BSR.

In some embodiments, the buffer size BS value or the BS value range corresponding to an index in the second type of BSR table is different from the buffer size BS value or the BS value range corresponding to the same index in the first type of BSR table; and/or a distribution pattern of the buffer size BS values or the BS value ranges corresponding to adjacent indexes in the second-type BSR table is different from the distribution pattern of the buffer size BS values or the BS value ranges corresponding to the same indexes in the first-type BSR table; and/or the number of indexes contained in the second-type BSR table is different from the number of indexes contained in the first-type BSR table contain.

It may be understood that compared with the first type of BSR table, the buffer size BS value or the BS value range corresponding to the same index in the second type BSR table is smaller, such that the difference between the amount of resources allocated to the terminal by the network device based on the BS value reported in the second type of BSR table and the amount of resources required for the actual transmission of the terminal is smaller, which may make the buffer size range reported by the terminal to the network device more accurate, effectively reducing resource waste and/or insufficient resource allocation.

In an embodiment, the buffer size BS values or BS value ranges corresponding to adjacent indexes in the second type of BSR table are linearly distributed.

It may be understood that a difference between the buffer size BS values or the BS value ranges corresponding to any two adjacent indexes in the second type of BSR table is the same.

In an embodiment, the buffer size BS values or the BS value ranges corresponding to adjacent indexes in the second type of BSR table are distributed in a piecewise linear manner.

In another embodiment, the buffer size BS values or the BS value ranges corresponding to the adjacent indexes in the second type of BSR table is exponentially distributed.

In an embodiment, the second type of BSR table may include a plurality of second-type BSR tables in different formats.

It should be noted that the second type of BSR table includes at least: a second-type BSR table in a first format. The second-type BSR table in the first format is used for describing a correspondence between 8-bit indexes and BS values.

It may be understood that the second-type BSR table in the first format is suitable for long BSR and/or the long truncated BSR.

The second type of BSR table may also include: a second-type BSR table in a second format.

The correspondence between the indexes and the BS values described by the second-type BSR table in the second format is different from the correspondence between the indexes and the BS values described by the first-type BSR table in the first format.

It is understandable that, for different data amounts of the terminal or data to be transmitted of different service types, the accuracy of the buffer size range reported by the first type of BSR table or the second type of BSR may be different.

In an embodiment of the disclosure, the first message is sent to the terminal by the network device, to instruct the terminal through the first message to send the BSR based on the first type of BSR table or the second type of BSR table when sending the BSR. In this way, the network device side may directly indicate the type of BSR table used for BSR reporting on the terminal side, such that when sending the BSR, the terminal may clearly know which type of BSR table from the first type of BSR table and the second type of BSR table to use, so as to report a more accurate buffer size range to the network device, thereby facilitating the network device to allocate an appropriate amount of resources to the terminal, and reducing resource waste and/or insufficient resource allocation caused by inaccurate buffer size range reported by the BSR. It may be understood that, by sending the BSR based on different types of BSR tables, the same BSR code value may correspond to different buffer size ranges. In order to accurately obtain the amount of data to be transmitted indicated by the BSR sent by the terminal, the network device sends the first message to the terminal to notify the terminal to determine the BSR index corresponding to the amount of data to be transmitted based on a specific correspondence (i.e., the first type of BSR table or the second type of BSR table), and send the BSR to the network device such that the network device allocates resources to the terminal based on the received BSR.

The embodiment may be combined with any other embodiments without contradiction. Any scheme (or optional scheme) in the embodiment may be combined with each other without contradiction. Any scheme in the embodiment may be combined with any scheme in other embodiments without contradiction. The steps in the embodiment may be exchanged in order without contradiction.

It should be noted that those skilled in the art may understand that the methods according to the embodiments of the disclosure may be executed alone or together with some methods in the embodiments of the disclosure or some methods in related art.

In some embodiments, sending the first message to the terminal includes at least one of the following:
sending a radio resource control (RRC) message including the first message to the terminal; or
sending a medium access control (MAC) control element (CE) including the first message to the terminal.

In an embodiment of the disclosure, the network device may add the first message to the RRC message, and send the RRC message carrying the first message to the terminal, such that the terminal obtains the first message from the RRC message.

It should be noted that the RRC message is a signaling message required for establishing, re-establishing, maintaining and releasing an RRC connection between a terminal and a network device. Here, the network device may carry the first message in a downlink RRC message.

In an embodiment, the RRC message includes at least one of the following:
an RRC connection establishment message;
an RRC connection recovery message; or
an RRC connection release message.

It may be understood that the network device may set any one or more bits in the RRC message to different bit values to carry the first message having different contents. For example, in a case where it is necessary to trigger the terminal to send a BSR based on the first type of BSR table, one or more bits in the RRC message may be set to 0. In a case where it is necessary to trigger the terminal to send a BSR based on the second type of BSR table, one or more bits in the RRC message may be set to 1. Thus, after receiving the RRC message, the terminal may determine, based on the value of the bits in the RRC message, whether to send the BSR based on the first type of BSR table or to send the BSR based on the second type of BSR table.

In an embodiment of the disclosure, the network device may further add the first message to the MAC CE, and send the MAC CE to the terminal, such that the terminal obtains the first message from the MAC CE.

It should be noted that MAC CE is a signaling message required for exchanging MAC layer control information between a terminal and a network device.

It is understandable that the network device may set any one or more bits in the MAC CE message to different bit values to carry the first message having different contents.

In an embodiment of the disclosure, the network device adds the first message to a dedicated signaling message, and send the first message for instructing the terminal to report the BSR based on the first type of BSR table or the second type of BSR table to the terminal while the network device transmit the dedicated signaling message with the terminal, to notify the terminal which BSR table from the first type of BSR table and the second type of BSR table to use for BSR reporting, thereby reducing the occupancy of communication resources.

In some embodiments, the first message is used for instructing the terminal to send a BSR based on the first type of BSR table or the second type of BSR table for one or more logical channels (LC).

Or the first message is used for instructing the terminal to send a BSR based on the first type of BSR table or the second type of BSR table for one or more logical channel groups (LCG).

In an embodiment of the disclosure, the network device may send the first message to the terminal and use the first message to configure the type of the BSR table corresponding to at least one logical channel group or logical channel in the terminal, that is, to configure the correspondence between BS values of the data transmitted in at least one logical channel group or logical channel in the terminal and indexes.

In an embodiment, the BSR tables corresponding to multiple logical channel groups of the terminal or corresponding to multiple logical channels in one logical channel group may all be the first type of BSR tables.

In another embodiment, the BSR tables corresponding to multiple logical channel groups of the terminal or corresponding to multiple logical channels in one logical channel group may all be the second-type BSR tables.

In another embodiment, among the multiple logical channel groups of the terminal, there is at least one logical channel group whose corresponding BSR table is the first type of BSR table, and there is at least one logical channel group whose corresponding BSR table is the second type of BSR table.

Or among the multiple logical channels in a logical channel group, there is at least one logical channel whose corresponding BSR table is the first type of BSR table, and there is at least one logical channel whose corresponding BSR table is the second type of BSR table.

It should be noted that the logical channel or logical channel group is defined based on different types of data transmission services transmitted between the terminal and the network device. The logical channel describes the type of data transmission service, that is, defines what type of data is transmitted. Different logical channels or logical channel groups correspond to different data transmission services, as well as different sizes of data transmitted. In order to adapt to the data transmission services of different logical channels or different logical channel groups, the types of BSR tables corresponding to different logical channels or different logical channel groups may be configured respectively.

In some embodiments, the first message further includes: an LC identifier (ID) or an LCG ID.

The first message is used for instructing the terminal to send a BSR based on the first type of BSR table or the second type of BSR table for an LC indicated by the LC ID, or for instructing the terminal to send a BSR based on the first type of BSR table or the second type of BSR table for an LCG indicated by the LCG ID.

In an embodiment of the disclosure, the first message further includes: a logical channel identifier or a logical channel group identifier.

It may be understood that the logical channel identifier may be used to uniquely identify the logical channel, and the logical channel group identifier may be used to uniquely identify the logical channel group.

The network device sends the first message carrying the LC ID or the LCG ID to the terminal, such that after receiving the first message, the terminal determines the logical channel corresponding to the LC ID based on the LC ID in the first message or determines the logical channel group corresponding to the LCG ID based on the LCG ID in the first message, and determines which one of the first type of BSR table and the second type of BSR table is used by the service data transmission on the logical channel or the logical channel group to send a BSR.

It should be noted that the network device adds the LC ID or the LCG ID in the first message, to use the first message to complete the configuration of the BSR reporting of a specific logical channel or a specific logical channel group in the terminal.

In some embodiments, the first message includes a first information field or a second information field.

The first information field includes at least one indication bit. The indication bit indicates that the BSR is sent based on the first type of BSR table or the second type of BSR table;

The second information field carries a triggering condition for triggering to send the BSR based on the first type of BSR table and/or the second type of BSR table.

In an embodiment of the disclosure, the first message includes a first information field or a second information field.

The first information field includes at least one indication bit.

It may be understood that different bit values of the indication bit correspond to the first type of BSR table or the second type of BSR table respectively.

For example, the first information field includes an indication bit. The value of the indication bit is 0, indicating that the terminal sends the BSR based on the first type of BSR table. The value of the indication bit is 1, indicating that the terminal sends the BSR based on the second type of BSR table.

In an embodiment, the first information field includes a plurality of indication bits.

It should be noted that, considering that the second type of BSR table may include multiple second-type BSR tables in different formats, using multiple indication bits, not only may the terminal be instructed to send the BSR based on the first type of BSR table or the second type of BSR table, but the terminal may also be instructed to send the BSR based on any one of the second-type BSR tables in different formats.

For example, the second type of BSR table may include: a second-type BSR table in the first format and a second-type BSR table in the second format. The first information field includes two indication bits. The value of the indication bits is 00, indicating that the terminal sends the BSR based on the first type of BSR table. The value of the indication bits is 01, indicating that the terminal sends the BSR based on the second-type BSR table in the first format. The value of the indication bit is 10, indicating that the terminal sends the BSR based on the second-type BSR table in the second format.

In an embodiment, the first information field includes a plurality of indication bits. The plurality of indication bits correspond to a plurality of logical channels of the terminal respectively. Or the plurality of indication bits correspond to a plurality of logical channel groups of the terminal respectively. It may be understood that the indication bit corresponding to any logical channel or any logical channel group indicates that the logical channel or the logical channel group sends a BSR based on the first type of BSR table or the second type of BSR table.

For example, FIG. 3 illustrates a structural diagram of the first information field according to an example embodiment. The first information field is 8 indication bits, and the 8 indication bits correspond to LCG1 to LCG8 respectively. In a case where a value of the indication bit corresponding to LCGi is 1, it indicates that the logical channel group corresponding to LCGi sends the BSR based on the second type of BSR table. In a case where a value of the indication bit corresponding to LCGi is 0, it indicates that the logical channel group corresponding to LCGi sends the BSR based on the first type of BSR table.

In an embodiment of the disclosure, the network device sets different indication bits in the first information field of the first message, and uses the indication bits in the first message to instruct the terminal to send the BSR based on the first type of BSR table or the second type of BSR table.

The second information field carries the triggering condition for triggering to send the BSR based on the first type of BSR table and/or the second type of BSR table.

In an embodiment of the disclosure, the network device sends the first message to the terminal. After receiving the first message, the terminal may obtain, based on the second information field in the first message, the trigger condition for triggering to send the BSR based on the first type of BSR table and/or the second type of BSR table, and send the BSR based on the first type of BSR table or the second type of BSR table when the trigger condition is met.

In an embodiment, the second information field carries a first trigger condition. The first trigger condition indicates a condition for triggering the terminal to send the BSR based on the second type of BSR table.

It may be understood that the network device sends the first message to the terminal. After receiving the first message, the terminal may obtain the first trigger condition based on the second information field in the first message, and send the BSR based on the second type of BSR table in the case where the first trigger condition is met and send the BSR based on the first type of BSR table in the case where the first trigger condition is not met.

In an embodiment, the first trigger condition is threshold information for triggering the use of the second type of BSR table. The threshold information includes: first threshold information and/or second threshold information. The first threshold information indicates a minimum buffer size threshold for sending the BSR using the second type of BSR table.

The second threshold information indicates a quantization error threshold for sending the BSR using the second type of BSR table.

Taking into account that the maximum buffer size range corresponding to the first type of BSR table may be different from the maximum buffer size range corresponding to the second type of BSR table, the first threshold information may be carried in the second information field of the first message to notify the terminal to send the BSR based on the second type of BSR table in the case where the size of data to be transmitted is greater than or equal to the minimum buffer size threshold indicated by the first threshold information, and to notify the terminal to send the BSR based on the first type of BSR table in the case where the size of data to be transmitted is less than the minimum size threshold indicated by the first threshold information.

It should be noted that the quantization error is used for describing a difference between the amount of resources reserved by the network device for the terminal based on the BSR sent by the terminal and the amount of resources actually required for the transmission performed by the terminal. It is understandable that the quantization error may be determined based on the difference between the buffer size range corresponding to the BS value and the actual sizeof data to be transmitted by the terminal. The larger the quantization error, the more likely it is that there will be resource waste due to excessive resource configuration and/or transmission delay due to insufficient resource configuration.

Therefore, by setting the second information field in the first message to carry the second threshold information, the network device may notify the terminal to send the BSR based on the second type of BSR table in the case where the quantization error corresponding to the amount of data to be transmitted is greater than or equal to the quantization error threshold indicated by the second threshold information, and to send the BSR based on the first type of BSR table in the case where the quantization error corresponding to the size of data to be transmitted is less than the quantization error threshold indicated by the second threshold information, thereby reducing the quantization error and reducing the resource waste and/or insufficient resource allocation caused by inaccurate buffer size range reported by the BSR.

In an embodiment, the second information field carries a second trigger condition. The second trigger condition indicates a condition for triggering the terminal to send the BSR based on a second-type BSR table in a target format.

It should be noted that the second type of BSR table may include multiple second-type BSR tables in different formats. The second-type BSR tables in different formats may be respectively adapted to data transmission services of different types and/or different data sizes. The second-type BSR table in the target format may be any one among the second-type BSR tables in different formats.

By setting the second information field in the first message to carry the second trigger condition, the network device may notify the terminal to send the BSR based on the second-type BSR table in the target format in the case where the second trigger condition is met.

The embodiment may be combined with any other embodiments without contradiction. Any scheme (or optional scheme) in the embodiment may be combined with each other without contradiction. Any scheme in the embodiment may be combined with any scheme in other embodiments without contradiction. The steps in the embodiment may be exchanged in order without contradiction.

It should be noted that those skilled in the art may understand that the methods according to the embodiments of the disclosure may be performed alone or together with some methods in the embodiments of the disclosure or some methods in related art.

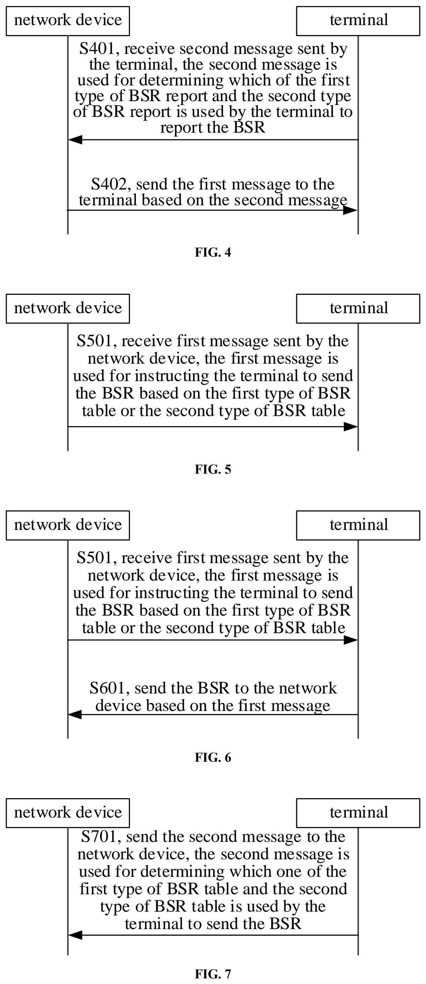

In some embodiments, FIG. 4 illustrates a second flowchart of a method for processing information according to an example embodiment. The method includes the following.

At step S401, a second message sent by a terminal is received. The second message is used for determining which of the first type of BSR table or the second type of BSR table is used to send the BSR.

At step S402, a first message is sent to the terminal based on the second message.

In an embodiment of the disclosure, the network device receives the second message sent by the terminal. Based on the second message from the terminal, the network device determines whether the terminal sends the BSR based on the first type of BSR table or the second type of BSR table, and sends the first message to the terminal.

The second message is used for assisting the network device in determining which of the first type of BSR table or the second type of BSR table is used by the terminal to report the BSR.

For example, the second message may be any message used by the network device to determine or send the message content of the first message.

For example, after receiving the second message, the network device may generate or send the first message based on the second message.

For example, the second message may carry relevant information about which BSR table is suitable to be used by the terminal to send the BSR.

The second message may indicate: a terminal type, UE where the terminal is located, a service type subscribed by the terminal, historical buffer value of the terminal and others.

In some embodiments, after receiving the second message, the network device may determine, based on the second message, configuration information carried in the first message. The configuration information directly or indirectly configures which BSR table is used to report the BSR.

In another embodiment, after receiving the second message, the network device may send the first message based on a system capacity and/or a configurable remaining resource of the network to control the maximum BS value and/or the BS value range reported by the BSR of the terminal. In this case, the second message may be a message that triggers the network device to send the first message, but the sending of the first message may ignore the message content of the second message.

The network device may determine the type of BSR table that is more suitable for the data to be transmitted by the terminal based on the second message sent by the terminal, and notify the terminal to report the BSR using this type of BSR table through the first message, thereby solving the problem of the network device configuring too large or too small resources for the terminal based on the reported BSR, such that the resources configured by the network device may better match the needs of the terminal device.

In an embodiment, the second message includes: a terminal type, a service type of the data to be transmitted, a size of the data to be transmitted, an arrival period of the data to be transmitted, and/or a delay requirement of the data to be transmitted.

In an embodiment, the second message may be carried in an RRC message and/or a MAC CE.

It should be noted that the RRC message is a signaling message required for establishing, re-establishing, maintaining and releasing an RRC connection between a terminal and a network device. The MAC CE is a signaling message required for exchanging MAC layer control information between a terminal and a network device.

Here, the RRC message is an uplink RRC message.

The network device may obtain the second message with different contents sent by the terminal based on different bit values of any one or more bits in the received RRC message or MAC CE.

In an embodiment, the RRC message includes at least one of the following:
an RRC connection establishment request;
an RRC connection reconfiguration request;
an RRC connection release request; or

UE assistance information (UAI).

It may be understood that, based on the second message sent by the terminal, the network device may be assisted to complete the configuration of the BSR reporting of the terminal.

In some embodiments, the second message includes first assistance information and/or second assistance information.

The first assistance information indicates that the terminal supports the use of the first type of BSR table and/or the second type of BSR table.

The second assistance information indicates that the terminal expects to use the first type of BSR table or the second type of BSR table to send the BSR.

In an embodiment of the disclosure, the second message may include first assistance information and/or second assistance information.

The first assistance information indicates that the terminal supports the use of the first type of BSR table and/or the second type of BSR table. That is, the first assistance information indicates a capability supported by the terminal to use in reporting the BSR.

It may be understood that in the case where the first assistance information indicates that the terminal only supports the use of the first type of BSR table, the network device may configure that the terminal sends the BSR based on the first type of BSR table by sending the first message. In the case where the first assistance information indicates that the terminal only supports the use of the second type of BSR table, the network device may configure that the terminal sends the BSR based on the second type of BSR table by sending the first message. In the case where the first assistance information indicates that the terminal supports the use of the first type of BSR table and the use of the second type of BSR table, the network device may configure that the terminal sends the BSR based on the first type of BSR table or based on the second type of BSR table by sending the first message.

The second assistance information indicates that the terminal expects to use the first type of BSR table or the second type of BSR table to send the BSR.

It may be understood that in the case where the second assistance information indicates that the terminal expects to use the first type of BSR table to send the BSR, the network device may configure that the terminal sends the BSR based on the first type of BSR table by sending the first message. In the case where the second assistance information indicates that the terminal expects to use the second type of BSR table to send the BSR, the network device may configure that the terminal sends the BSR based on the second type of BSR table by sending the first message.

In an embodiment, the second message includes: first assistance information and second assistance information.

In the case where the first assistance information indicates that the terminal supports the use of the first type of BSR table or the use of the second type of BSR table, the network device sends the first message to the terminal based on the first assistance information.

In the case where the first assistance information indicates that the terminal supports the use of the first type of BSR table and the use of the second type of BSR table, the network device sends the first message to the terminal based on the second assistance information.

It may be understood that in the case where the first assistance information indicates that the terminal only supports the use of the first type of BSR table, or where the terminal only supports the use of the second type of BSR table, the network device may configure the BSR reporting of the terminal based on the type of BSR table indicated by the first assistance information, in the case where the first assistance information indicates that the terminal supports the use of the first type of BSR table and the use of the second type of BSR table, the network device may configure the BSR reporting of the terminal based on the type of BSR table indicated by the second assistance information, that is, the type of BSR table that the terminal expects to use.

The following describes the methods for processing information performed by a terminal, which are similar to the description of the methods for processing information performed by the above-mentioned network device. For technical details not disclosed in the embodiments of the methods for processing information performed by the terminal, reference may be made to the description of the examples of the methods for processing information performed by the network device, and no detailed description is given here.

FIG. 5 is a third flowchart diagram of a method for processing information according to an example embodiment. As illustrated in FIG. 5, an embodiment of the disclosure provides a method for processing information performed by a terminal. The method includes the following.

At step S501, a first message sent by a network device is received. The first message is used for instructing the terminal to send a BSR based on a first type of BSR table or a second type of BSR table.

The terminal involved in embodiments of the disclosure may be a UE, etc. For example, the terminal may be, but not limited to, a mobile phone, a computer, a server, a wearable device, a game control platform, or a multimedia device. The network device may be a base station or other device on the network side. For example, the network device may be, but not limited to, at least one of: a 3G base station, a 4G base station, a 5G base station, or other evolved base stations.

In an embodiment of the disclosure, the terminal receives the first message sent by the network device. The first message is used for instructing the terminal to set a BS value index carried in the BSR based on a correspondence between buffer size ranges (i.e., BS values) and indexes described by the first type of BSR table, or based on a correspondence between buffer size ranges (i.e., BS values) and indexes described by the second type of BSR table, in sending the BSR.

In an embodiment, a buffer size BS value or a BS value range corresponding to an index in the second type of BSR table is different from a buffer size BS value or a BS value range corresponding to the same index in the first type of BSR table;
and/or a distribution pattern of buffer size BS values or of BS value ranges corresponding to adjacent indexes in the second-type of BSR table is different from a distribution pattern of buffer size BS values or of BS value ranges corresponding to the same indexes in the first type of BSR table;
and/or the number of indexes contained in the second type of BSR table is different from the number of indexes contained in the first type of BSR table.

In an embodiment, the first type of BSR table may include: a first-type BSR table in a short format and a first-type BSR table in a long format.

In an embodiment, the second type of BSR table may include second-type BSR tables in different formats.

For the above implementations, reference may be made the description on the network device side for details, which will not be repeated here.

The embodiment may be combined with any other embodiments without contradiction. Any scheme (or optional scheme) in the embodiment may be combined with each other without contradiction. Any scheme in the embodiment may be combined with any scheme in other embodiments without contradiction. The steps in the embodiment may be exchanged in order without contradiction.

It should be noted that those skilled in the art may understand that the methods according to the embodiments of the disclosure may be performed alone or together with some methods in the embodiments of the disclosure or some methods in related art.

FIG. 6 is a fourth flowchart of a method for processing information according to an example embodiment. As illustrated in FIG. 6, the method further includes the following.

At step S601, the BSR is sent to the network device based on a first message.

In an embodiment of the disclosure, after receiving the first message, the terminal sends the BSR to the network device based on the first type of BSR table or the second type of BSR table indicated by the first message, such that the network device obtains an index in the BSR, determines the buffer size range corresponding to the index based on the first type of BSR table or the second type of BSR table indicated by the first message, and allocates resources to the terminal.

For details about BSR, reference may be made to the description on the network device side, which will not be repeated here.

In some embodiments, the first message includes: an RRC message or a MAC CE.

In an embodiment of the disclosure, the first message is carried in the RRC message or the MAC CE. It may be understood that the terminal receives the RRC message including the first message sent by the network device, or the terminal receives the MAC CE including the first message sent by the network device.

It should be noted that the RRC message is a signaling message required for establishing, re-establishing, maintaining and releasing an RRC connection between a terminal and a network device. The MAC CE is a signaling message required for exchanging MAC layer control information between a terminal and a network device.

In an embodiment, the RRC message includes at least one of the following:
an RRC connection establishment message;
an RRC connection recovery message; or
an RRC connection release message.

It is understandable that the terminal may obtain the message content of the first message based on the bit value of any one or more bits in the received RRC message or MAC CE. Different bit values carry different contents of the first message.

For the above implementations, reference may be made to the description on the network device side for details, which will not be repeated here.

In some embodiments, the first message is used for instructing the terminal to send the BSR based on the first type of BSR table or the second type of BSR table for one or more LCs.

Or the first message is used for instructing the terminal to send the BSR based on the first type of BSR table or the second type of BSR table for one or more LCGs.

In an embodiment of the disclosure, the terminal configures the type of the BSR table corresponding to at least one logical channel group or logical channel in the terminal based on the received first message. That is, the terminal configures a correspondence between buffer size ranges (i.e., BS values) of the data transmitted in at least one logical channel group or logical channel and indexes in the terminal.

In an embodiment, the BSR tables corresponding to multiple logical channel groups of the terminal or corresponding to multiple logical channels in one logical channel group may all be the first type of BSR tables.

In another embodiment, the BSR tables corresponding to multiple logical channel groups of the terminal or corresponding to multiple logical channels in one logical channel group may all be the second type of BSR tables.

In another embodiment, among the multiple logical channel groups of the terminal, there is at least one logical channel group whose corresponding BSR table is the first type of BSR table, and there is at least one logical channel group whose corresponding BSR table is the second type of BSR table.

Or among the multiple logical channels in a logical channel group, there is at least one logical channel whose corresponding BSR table is the first type of BSR table, and there is at least one logical channel whose corresponding BSR table is the second type of BSR table.

For the above implementations, reference may be made to the description on the network device side for details, which will not be repeated here.

In some embodiments, the first message further includes: an LC identifier ID or an LCG ID.

The first message is used for instructing the terminal to send a BSR based on the first type of BSR table or the second type of BSR table for an LC indicated by the LC ID, or for instructing the terminal to send a BSR based on the first type of BSR table or the second type of BSR table for an LCG indicated by the LCG ID.

In an embodiment of the disclosure, the first message further includes: a logical channel identifier or a logical channel group identifier.

It may be understood that the logical channel identifier may be used to uniquely identify the logical channel, and the logical channel group identifier may be used to uniquely identify the logical channel group.

The terminal determines the logical channel corresponding to the LC ID based on the LC ID carried in the received first message or determines the logical channel group corresponding to the LCG ID based on the LCG ID carried in the received first message, and determines which one of the first type of BSR table and the second type of BSR table is used by the service data transmission on the logical channel or the logical channel group to send a BSR.

It should be noted that the terminal obtains, based on the LC ID or LCG ID in the first message, the configuration information, configured by the network device, used for reporting the BSR for at least one specific logical channel or logical channel group in the terminal, such that in transmitting the service data using the at least one specific logical channel or logical channel group, the BSR is sent based on the first type of BSR table or the second type of BSR table indicated by the first message.

In some embodiments, the first message includes a first information field or a second information field.

The first information field includes at least one indication bit. The indication bit indicates that the BSR is sent based on the first type of BSR table or the second type of BSR table.

The second information field carries a triggering condition for triggering to send the BSR based on the first type of BSR table and/or the second type of BSR table.

In an embodiment of the disclosure, the first message includes: a first information field or a second information field.

The first information field includes at least one indication bit.

It may be understood that different bit values of the indication bit correspond to the first type of BSR table or the second type of BSR table respectively.

In an embodiment, the first information field includes a plurality of indication bits.

It should be noted that, considering that the second type of BSR table may include multiple second-type BSR tables in different formats, using multiple indication bits, not only may the terminal be instructed to send the BSR based on the first type of BSR tables or the second type of BSR table, but the terminal may also be instructed to send the BSR based on any one of the second-type BSR tables in different formats.

In an embodiment, the first information field includes a plurality of indication bits. The plurality of indication bits correspond to a plurality of logical channels of the terminal respectively. Or the plurality of indication bits correspond to a plurality of logical channel groups of the terminal respectively.

The second information field carries the triggering condition for triggering to send the BSR based on the first type of BSR table and/or the second type of BSR table.

In an embodiment of the disclosure, after receiving the first message, the terminal may obtain, based on the second information field in the first message, the triggering condition for triggering to send the BSR based on the first type of BSR table and/or the second type of BSR table, such that in the case where the triggering condition is met, the BSR is sent based on the first type of BSR table or the second type of BSR table.

In an embodiment, the second information field carries a first trigger condition. The first trigger condition indicates a condition for triggering the terminal to send the BSR based on the second type of BSR table.

It may be understood that after receiving the first message, the terminal may obtain the first trigger condition based on the second information field in the first message, and send the BSR based on the second type of BSR table in the case where the first trigger condition is met, and send the BSR based on the first type of BSR table in the case where the first trigger condition is not met.

In an embodiment, the first trigger condition is threshold information for triggering the use of the second type of BSR table. The threshold information includes first threshold information and/or second threshold information. The first threshold information indicates a minimum buffer size threshold for sending the BSR using the second type of BSR table.

The second threshold information indicates a quantization error threshold for sending a BSR using the second type of BSR table.

In an embodiment, the second information field carries a second trigger condition. The second trigger condition indicates a condition for triggering the terminal to send the BSR based on a second-type BSR table in a target format.

It should be noted that the second type of BSR table may include multiple second-type BSR tables in different formats. The second-type BSR tables in different formats may be respectively adapted to data transmission services of different types and/or different sizes. The second-type BSR table in the target format may be any one among the second-type BSR tables in different formats.

For the above implementations, reference may be made to the description on the network device side for details, which will not be repeated here.

The embodiment may be combined with any other embodiments without contradiction. Any scheme (or optional scheme) in the embodiment may be combined with each other without contradiction. Any scheme in the embodiment may be combined with any scheme in other embodiments without contradiction. The steps in the embodiment may be exchanged in order without contradiction.

It should be noted that those skilled in the art may understand that the methods according to the embodiments of the disclosure may be performed alone or together with some methods in the embodiments of the disclosure or some methods in related art.

FIG. 7 is a fifth flowchart diagram of a method for processing information according to an example embodiment. As illustrated in FIG. 7, the method further includes the following.

At step S701, a second message is sent to the network device. The second message is used for determining which of the first type of BSR table or the second type of BSR table is used by the terminal to send the BSR.

In an embodiment of the disclosure, the terminal sends the second message to the network device, such that after receiving the second message, the network device determines the type of BSR table used by the terminal based on the second message, thereby assisting the network device in completing the configuration of BSR reporting of the terminal.

In an embodiment, the second message may be carried in an RRC message and/or a MAC CE.

It should be noted that the RRC message is a signaling message required for establishing, re-establishing, maintaining and releasing an RRC connection between a terminal and a network device. The MAC CE is a signaling message required for exchanging MAC layer control information between a terminal and a network device.

Here, the RRC message is an uplink RRC message.

The terminal may set any one or more bits in the RRC message or MAC CE to different bit values to carry the second message with different contents.

In an embodiment, the RRC message includes at least one of the following:
an RRC connection establishment request;
an RRC connection reconfiguration request;
an RRC connection release request; or
a UAI.

For the above implementations, reference may be made to the description on the network device side for details, which will not be repeated here.

The embodiment may be combined with any other embodiments without contradiction. Any scheme (or optional scheme) in the embodiment may be combined with each other without contradiction. Any scheme in the embodiment may be combined with any scheme in other embodiments without contradiction. The steps in the embodiment may be exchanged in order without contradiction.

It should be noted that those skilled in the art may understand that the methods according to the embodiments of the disclosure may be performed alone or together with some methods in the embodiments of the disclosure or some methods in related art.

In some embodiments, the second message includes first assistance information and/or second assistance information.

The first assistance information indicates that the terminal supports the use of the first type of BSR table and/or the second type of BSR table.

The second assistance information indicates that the terminal expects to use the first type of BSR table or the second type of BSR table to send the BSR.

In an embodiment of the disclosure, the second message may include first assistance information and/or second assistance information.

The first assistance information indicates that the terminal supports the use of the first type of BSR table and/or the second type of BSR table. That is, the first assistance information indicates a capability supported by the terminal to use in reporting the BSR.

The second assistance information indicates that the terminal expects to use the first type of BSR table or the second type of BSR table to send the BSR.

In an embodiment, the second message includes: first assistance information and second assistance information.

In a case where the first assistance information indicates that the terminal supports the use of the first type of BSR table or the use of the second type of BSR table, the network device sends the first message to the terminal based on the first assistance information.

In the case where the first assistance information indicates that the terminal supports the use of the first type of BSR table and the use of the second type of BSR table, the network device sends the first message to the terminal based on the second assistance information.

For the above implementations, reference may be made to the description on the network device side for details, which will not be repeated here.

The embodiment may be combined with any other embodiments without contradiction. Any scheme (or optional scheme) in the embodiment may be combined with each other without contradiction. Any scheme in the embodiment may be combined with any scheme in other embodiments without contradiction. The steps in the embodiment may be exchanged in order without contradiction.

It should be noted that those skilled in the art may understand that the methods according to the embodiments of the disclosure may be performed alone or together with some methods in the embodiments of the disclosure or some methods in related art.

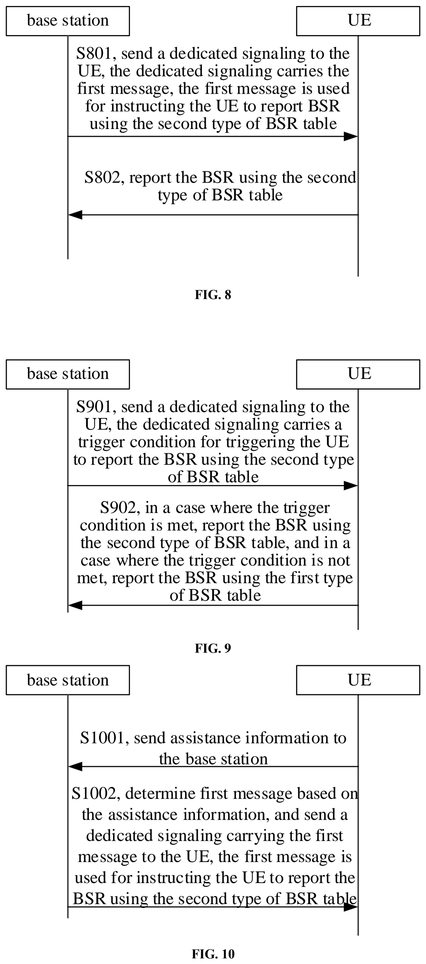

As illustrated in FIG. 8, FIG. 8 is a sixth flowchart of a method for processing information according to an example embodiment. The disclosure provides a method for processing information performed by a communication device. The communication device includes: a UE and a base station. The method for processing information includes the following. At step S801, the base station sends a dedicated signaling to the UE. The dedicated signaling carries a first message. The first message is used for instructing the UE to report the BSR using the second type of BSR table. The dedicated signaling may include but is not limited to an RRC message.

At step S802, the UE reports the BSR using the second type of BSR table.

Here, the first message may be used for configuring the UE to report the BSR using the second of type BSR. Or the first message may be used for activating the UE to report the BSR using the second type of BSR table. Or the first message may be used for enabling the UE to report the BSR using the second type of BSR table.

For example, at step S801A, the base station sends an RRC message to the UE. The RRC message is used for instructing the UE to report the BSR using the second type of BSR table. For example, at step S801B, the base station sends a MAC CE to the UE. The MAC CE is used for instructing the UE to report the BSR using the second type the BSR table. For example, the first message may include an information field. The information field may include one or more indication bits. The indication bits are used for indicating that one or more LCGs use the first type of BSR table or the second type of BSR table to report the BSR. The use of MAC CE for indication may be more dynamic than the user of the RRC.

The base station may configure for each of the multiple LCGs of the UE separately to specify which one of the first type of BSR table or the second type of BSR table is used by each LCG to report the BSR. Or the base station may configure for multiple LCGs of the UE in batches to specify which one of the first type of BSR table or the second type of BSR table is used by each LCG to report the BSR.

As an embodiment, the information field may include one or more indication bits. The one or more indication bits correspond to one or more logical channel group indication information (for example, 8 bits corresponding to LCG1-LCG8, corresponding to 8 LCGs of the UE). In this case, the indication bit corresponding to LCGi is used for indicating that the LCG corresponding to LCGi uses the first type of BSR table or the second type of BSR table to report the BSR.

For example, in the case where the information domain includes one indication bit, if the value of the indication bit corresponding to LCGi is 1, it indicates that the logical channel group corresponding to LCGi sends the BSR based on the second type of BSR table. If the value of the indication bit corresponding to LCGi is 0, it indicates that the logical channel group corresponding to LCGi sends the BSR based on the first type of BSR table.

Considering that the second type of BSR table may include multiple second-type BSR tables in different formats, the information field may include multiple indication bits.

As another example, in the case where the information domain includes two indication bits, if the value of the indication bits of the LCGi field is 00, it indicates that the logical channel group corresponding to the LCGi field sends the BSR based on the first type of BSR table. If the value of the indication bits of the LCGi field is 01, it indicates that the logical channel group corresponding to the LCGi field sends the BSR based on the second-type BSR table in the first format. If the value of the indication bit of the LCGi field is 10, it indicates that the logical channel group corresponding to the LCGi field sends the BSR based on the second-type BSR table in the second format.

As illustrated in FIG. 9, FIG. 9 is a seventh flowchart of a method for processing information according to an example embodiment. The embodiment of the disclosure provides a method for processing information performed by a communication device. The communication device includes a UE and a base station. The method for processing information includes the following. At step S901, the base station sends a dedicated signaling to the UE. The dedicated signaling carries a trigger condition for triggering the UE to report a BSR using the second type of BSR table.

At step S902, in the case where the triggering condition is met, the UE uses the second type of BSR table to report the BSR. In the case where the triggering condition is not met, the UE uses the first type of BSR table to report the BSR.

For example, the dedicated signaling carries a buffer size threshold for triggering the UE to use the second type of BSR table to report the BSR.

It may be understood that in the case where the data amount (or called buffer size) of data to be transmitted by the UE is less than the buffer size threshold carried by the dedicated signaling, the UE is triggered to use the first type of BSR table to report the BSR. In the case where the buffer size of data to be transmitted by the UE is greater than or equal to the buffer size threshold carried by the dedicated signaling, the UE is triggered to use the second type of BSR table to report the BSR.

For example, the dedicated signaling carries a quantization error threshold for triggering the UE to use the second type of BSR table to report the BSR.

It may be understood that the UE determines the quantization error used for the BSR reporting based on the first type of BSR table based on the data amount (or called buffer size) of data to be transmitted. In the case where the quantization error is less than the quantization error threshold carried by the dedicated signaling, the UE is triggered to use the first type of BSR table to report the BSR. In the case where the quantization error is greater than or equal to the quantization error threshold carried by the dedicated signaling, the UE is triggered to use the second type of BSR table to report the BSR.

As illustrated in FIG. 10, FIG. 10 is an eighth flowchart of a method for processing information according to an example embodiment. The embodiment of the disclosure provides a method for processing information performed by a communication device. The communication device includes a UE and a base station. The method for processing information includes the following.

At step S1001, the UE sends assistance information to the base station.

At step S1002, the base station determines a first message based on the assistance information and sends a dedicated signaling carrying the first message to the UE. The first message is used for instructing the UE to report the BSR using the second type of BSR table.

For example, the assistance information includes capability information indicating whether the UE supports using the second type of BSR table to report the BSR.

It may be understood that the UE sends the capability information to the base station. In the case where the capability information indicates that the UE supports the use of the second type of BSR table to report the BSR, the base station may configure that the UE uses the second type of BSR table to report the BSR. In the case where the capability information indicates that the UE supports the use of the first type of BSR table to report the BSR, the base station may configure that the UE uses the first type of BSR table to report the BSR. In the case where the capability information indicates that the UE supports the use of the first type of BSR table and the user of the second type of BSR table to report the BSR, the base station may configure that the UE uses the first type of BSR table or the second type of BSR table to report the BSR.

For example, the assistance information includes: first expectation information indicating whether the UE expects to use the second type of BSR table to report the BSR.

It may be understood that the UE may estimate the size of data to be transmitted. In the case where the estimated size of data to be transmitted is large, the UE sends, to the base station, the expectation information for indicating that the UE expects to use the second type of BSR to report the BSR, such that the base station configures that the UE uses the second type of BSE table to report the BSR.

For example, the assistance information includes second expectation information, for indicating that the UE expects to use the first type of BSR table or the second type of BSR table to report the BSR.

In an embodiment, the terminal notifies the network device that the terminal uses the second type of BSR table to report the BSR.

There are many ways that the terminal informs the network device of the BSR table used to report the BSR, which may include but are not limited to at least one of the following.

Mode 1: The terminal adopts an implicit manner to inform the network device of which one of the first type of BSR table or the second type of BSR table is used.

For example, in the case where BS values of multiple LCGs are reported, these logical channel groups (LCGs) use the same BSR table, and thus the BSR tables cannot be distinguished per LCG.

In this case, as an embodiment, remaining code points in a reserved LCID field are used to indicate that the terminal is using a new BSR table. The new BSR table may be the afore-mentioned "second type of BSR table".

As an embodiment, a reserved field in a MAC header of a MAC sub-PDU corresponding to the BSR is used for identifying whether to use the new BSR table or the old BSR table for reporting. The old BSR table here may be the afore-mentioned "first type of BSR table".

The above two embodiments may be used in combination.

For example, a BSR may be of following various types:
extended short BSR;
extended short truncated BSR;
extended long BSR;
extended long truncated BSR; or
extended pre-emptive BSR.

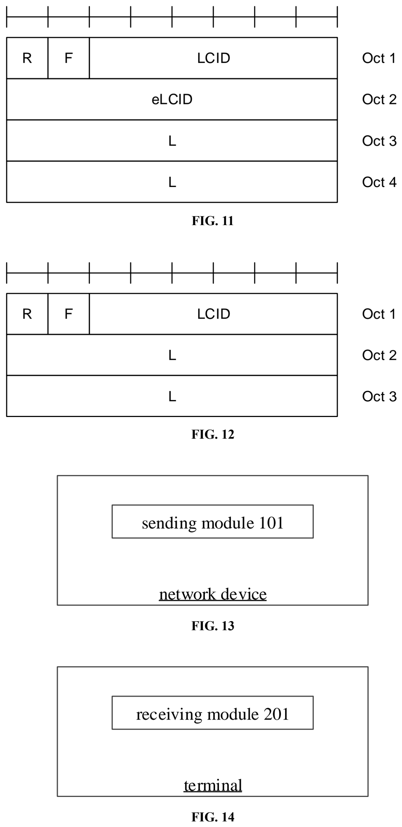

As illustrated in FIG. 11, FIG. 11 is a first schematic diagram of a MAC sub-PDU according to an example embodiment. The MAC sub-header uses the logical channel identifier (LCID) field and the extended logical channel identifier (eLCID) field to indicate the data carried. In the case where the eLCID field is used to carry the MAC control unit, such as carrying an extended pre-emptive BSR MAC CE, there is a reserved code point for the BSR because of the eLCID field indication, and the reserved code point is used to carry the indication information, thereby realizing the inclusion of the indication information in the BSR. For example, using one reserved eLCID indicates that an extended pre-emptive BSR is reported using the second type of BSR table, to distinguish it from the extended pre-emptive BSR reported using the first type of BSR table.

As illustrated in FIG. 12, FIG. 12 is a second schematic diagram of a MAC sub-PDU according to an example embodiment. The MAC header has a LCID and does not have or use any eLCID field. There is not enough code points for the BSR. In this case, the MAC sub-header may be used to carry indication information.

For example, for the following types of BSR:
extended short BSR, extended short truncated BSR; extended long BSR, extended long truncated BSR, and extended pre-emptive BSR carry MAC sub-PDU. The MAC sub-PDU may be the MAC CE. There are enough reserved code points for using the eLCID field in the MAC sub-header of MAC CE, and huts for this type of BSR reporting, the indication information may be reported by using the reserved code points. For Long BSR, Long Truncated BSR, and Pre-emptive BSR MAC CE, because the reserved code points for using the LCID field in the MAC sub-header of the MAC sub-PDU carrying its transmission are limited, the MAC sub-header may be used to carry the indication information.

As an embodiment, for the long BSR, since the MAC subheader of the MAC sub-PDU carrying its transmission uses LCID = 62, the MAC subheader may be further used to carry indication information to indicate which BSR table is used to report the BSR. For example, in the case where the reserved bit R=0 in the MAC subheader, it means that a long BSR is reported using the first type of BSR table. In the case where the reserved bit R=1 in the MAC subheader, it means that a long BSR is reported using the second type of BSR table.

As an embodiment, for the case where the terminal implicitly indicate which one of the first type of BSR table or the second type of BSR table is used to report the BSR, it may be agreed upon that all LCGs in the BSR reporting use the same type of BSR table for reporting, for example, the first type of BSR table or the second of BSR table is used. Otherwise, the same BSR MAC CE cannot be reused for reporting the buffers of LCGs using different types of BSR tables.

Mode 2: The terminal adopts an explicit manner to inform the network device of which one of the first type of BSR table or the second type of BSR table is used.

In this case, the BSRs of different logical channel groups may use the same or different BSR tables.

When the terminal reports the BSR, following information may be carried:
LCGID
Buffer size; or
Table information of the BSR table used, such as a table index.

In some embodiments, if the BSR carries the table information, the BSR table used by the BSR may be determined based on the table information.

In other embodiments, if the BSR does not carry table information, it is considered that the BSR uses the first type of BSR table and/or the BSR table indicated by the configuration information from the network device.

In detail, if the BSR carries the table information, a specific table index or a table indication value may be indicated.

The table indication value may correspond to one or more bits.

The table indication value may be that the value being 0 indicates the BSR table 1, and the value being 1 indicates the BSR table 2.

The table index used may be at an LCG granularity, a Quality of Service (QoS) flow granularity or a Data Radio Bearer (DRB) granularity.

In some embodiments, multiple LCGs may share the same BSR table.

As an embodiment, the terminal may explicitly indicate which one of the first type of BSR table and the second type of BSR table is used to report the BSR, the BS values of the LCGs using different types of BSR tables may be carried in the same BSR MAC CE for reporting, and which type of BSR table used for reporting the BS value of the target LCG is indicated.

The disclosure provides a system for processing information. The system includes: a network device and a terminal.

The network device is configured to: send a first message to the terminal. The first message is used for instructing the terminal to send a BSR based on a first type of BSR table or a second type of BSR table.

The terminal is configured to: receive the first message sent by a network device, and send the BSR to the network device based on the first message.

In some embodiments, the first message is used for instructing the terminal to send the BSR based on the first type of BSR table or the second type of BSR table for one or more logical channels, or the first message is used for instructing the terminal to send the BSR based on the first type of BSR table or the second type of BSR table for one or more logical channel groups.

In some embodiments, the first message further includes: an LC ID or an LCG ID;

The first message is used for instructing the terminal to send the BSR based on the first type of BSR table or the second type of BSR table for an LC indicated by the LC ID or for instructing the terminal to send the BSR based on the first type of BSR table or the second type of BSR table for an LCG indicated by the LCG ID.

In some embodiments, the first message includes a first information field.

The first information field includes at least one indication bit. The indication bit indicates that the BSR is sent based on the first type of BSR table or the second type of BSR table.

In some embodiments, the first message includes a second information field.

The second information field carries a trigger condition for triggering to send the BSR based on the first type of BSR table or the second type of BSR table.

For example, the network device is configured to perform at least one of the following:
sending am RRC message including the first message to the terminal; or
sending a MAC CE including the first message to the terminal.

For the above implementations, reference may be made to the description on the network device side and/or the terminal side, which will not be described in detail here.

The embodiment may be arbitrarily combined with other embodiments without contradiction. Any scheme (or optional scheme) in the embodiment may be combined with each other without contradiction. Any scheme in the embodiment may be combined with any scheme in other embodiments without contradiction. The steps in the embodiment may be exchanged in order without contradiction. Each step in the embodiment may be used as a separate embodiment. Any steps in the embodiment may be combined with each other without contradiction.

It should be noted that those skilled in the art may understand that the methods according to the embodiments of the disclosure may be performed alone or together with some methods in the embodiments of the disclosure or some methods in related art.

The disclosure provides a system for processing information. The system includes: a network device and a terminal.

The terminal is configured to: send a second message to the network device. The second message is used for determining which one of the first type of BSR table or the second type of BSR table is used by the terminal to send a BSR.

The network device is configured to: receive a second message sent by the terminal and send a first message to the terminal based on the second message.

The terminal is further configured to: receive the first message sent by the network device, and send the BSR to the network device according to the first message.

In some embodiments, the second message includes first assistance information and/or second assistance information.

The first assistance information indicates that the terminal supports the use of the first type of BSR table and/or the use of the second type of BSR table

The second assistance information indicates that the terminal expects to use the first type of BSR table or the second type of BSR table to send the BSR.

For the above implementations, reference may be made to the description on the network device side and/or the terminal side, which will not be described in detail here.

The embodiment may be arbitrarily combined with other embodiments without contradiction. Any scheme (or optional scheme) in the embodiment may be combined with each other without contradiction. Any scheme in the embodiment may be combined with any scheme in other embodiments without contradiction. The steps in the embodiment may be exchanged in order without contradiction. Each step in the embodiment may be used as a separate embodiment. Any steps in the embodiment may be combined with each other without contradiction.

It should be noted that those skilled in the art may understand that the methods according to the embodiments of the disclosure may be executed alone or together with some methods in the embodiments of the disclosure or some methods in related art.

As illustrated in FIG. 13, FIG. 13 is a schematic diagram of the structure of a network device according to an example embodiment. The network device includes a sending module 101.

The sending module 101 is configured to send a first message to a terminal. The first message is used for instructing the terminal to send a BSR based on a first type of BSR table or a second type of BSR table.

In some embodiments, the sending module 101 is configured to perform at least one of the following:
sending an RRC message including the first message to the terminal; or
sending an MAC CE including the first message to a terminal.

In some embodiments, the first message is used for instructing the terminal to send the BSR based on the first type of BSR table or the second type of BSR table for one or more logical channels.

Or the first message is used for instructing the terminal to send the BSR based on the first type of BSR table or the second type of BSR table for one or more logical channel groups.

In some embodiments, the first message further includes: an LC ID or an LCG ID.

The first message is used for instructing the terminal to send the BSR based on the first type of BSR table or the second type of BSR table for an LC indicated by the LC 10; or for instructing the terminal to send the BSR based on the first type of BSR table or the second type of BSR table for an LCG indicated by the LCG ID.

In some embodiments, the first message includes a first information field or a second information field.

The first information field includes at least one indication bit. The indication bit indicates that the BSR is sent based on the first type of BSR table or the second type of BSR table;
The second information field carries a triggering condition for triggering to send the BSR based on the first type of BSR table or the second type of BSR table.

In some embodiments, the sending module 101 is further configured to: receiving a second message sent by the terminal.

The second message is used for determining which one of the first type of BSR table and the second type of BSR table is used by the terminal to send the BSR.

The sending module 101 is further configured to send the first message to the terminal based on the second message.

In some embodiments, the second message includes: first assistance information and/or second assistance information.

The first assistance information indicates that the terminal supports the use of the first type of BSR table and/or the use of the second type of BSR table.

The second assistance information indicates that the terminal expects to use the first type of BSR table or the second type of BSR table to send the BSR.

As illustrated in FIG. 14, FIG. 14 is a schematic diagram of the structure of a terminal according to an example embodiment. The terminal includes a receiving module 201.

The receiving module 201 is configured to receive a first message sent by a network device. The first message is used for instructing a terminal to send a BSR based on a first type of BSR table or a second type of BSR table.

In some embodiments, the receiving module 201 is further configured to:
send the BSR to the network device based on the first message.

In some embodiments, the first message includes: an RRC message or an MAC CE.

In some embodiments, the first message is used for instructing the terminal to send the BSR based on the first type of BSR table or the second type of BSR table for one or more logical channels.

Or the first message is used for instructing the terminal to send the BSR based on the first type of BSR table or the second type of BSR table for one or more logical channel group.

In some embodiments, the first message further includes: an LC ID or an LCG ID.

The first message is used for instructing the terminal to send the BSR based on the first type of BSR table or the second type of BSR table for an LC indicated by the LC ID; or for instructing the terminal to send the BSR based on the first type of BSR table or the second type of BSR table for an LCG indicated by the LCG ID.

In some embodiments, the first message includes a first information field or a second information field.

The first information field includes at least one indication bit. The indication bit indicates that the BSR is sent based on the first type of BSR table or the second type of BSR table.

The second information field carries a triggering condition for triggering to send the BSR based on the first type of BSR table or the second type of BSR table.

In some embodiments, the receiving module 201 is further configured to:
send a second message to the network device. The second message is used for determining which one of the first type of BSR table or the second type of BSR table is used by the terminal to send the BSR.

In some embodiments, the second message includes: first assistance information or second assistance information.

The first assistance information indicates that the terminal supports the use of the first type of BSR table and/or the use of the second type of BSR table.

The second assistance information indicates that the terminal expects to use the first type of BSR table or the second type of BSR table to send the BSR.

The disclosure provides a communication device. The communication device includes:
a memory for storing processor-executable instructions; and
a processor, connected to the memory.

The processor is configured to perform the method for processing information according to any of the afore-mentioned technical solutions.

The processor may include various types of storage media, which are non-transitory computer storage media that may continue to retain information stored thereon after the communication device loses power.

Here, the communication device includes: UE or a network element. The network element may be any one of a first network element to a fourth network element mentioned above.

The processor may be connected to the memory via a bus or the like, and is used to read the executable program stored in the memory.

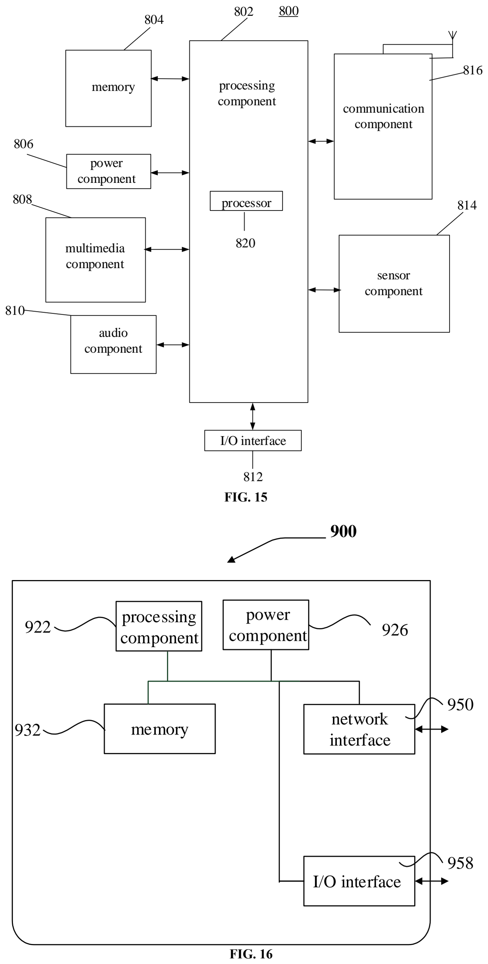

FIG. 15 is a block diagram of a UE 800 according to an example embodiment. For example, the UE 800 may be a mobile phone, a computer, a digital broadcast user equipment, a messaging device, a game console, a tablet device, a medical device, a fitness device, a personal digital assistant, etc.

As illustrated in FIG. 15, UE 800 may include one or more of the following components: a processing component 802, a memory 804, a power component 806, a multimedia component 808, an audio component 810, an input/output (I/O) interface 812, a sensor component 814, or a communication component 816.

The processing component 802 generally controls the overall operation of the UE 800, such as operations associated with display, phone calls, data communications, camera operations, and recording operations. The processing component 802 may include one or more processors 820 to execute instructions to generate all or part of the steps of the above-mentioned methods. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the UE 800. Examples of such data include instructions for any application or method operating on the UE 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 806 provides power to various components of the UE 800. The power component 806 may include a power management system, one or more power supplies, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front-facing camera and/or a rear-facing camera. When the UE 800 is in an operating mode, such as a shooting mode or a video mode, the front-facing camera and/or the rear-facing camera may receive external multimedia data. Each front-facing camera and rear-facing camera may be a fixed optical lens system or have a focal length and optical zoom capability.

The audio component 810 is configured to output and/or input audio signals. For example, the audio component 810 includes a microphone (MIC), and when the UE 800 is in an operation mode, such as a call mode, a recording mode, and a speech recognition mode, the microphone is configured to receive an external audio signal. The received audio signal may be further stored in the memory 804 or sent via the communication component 816. In some embodiments, the audio component 810 also includes a speaker for outputting audio signals.

The I/O interface 812 provides an interface between processing component 802 and peripheral interface modules, such as keyboards, click wheels, buttons, etc. These buttons may include but are not limited to: home button, volume button, start button, and lock button.

The sensor component 814 includes one or more sensors for providing various aspects of status assessment for the UE 800. For example, the sensor component 814 may detect the open/closed state of the UE 800, the relative positioning of the components, such as the display and keypad of the UE 800, and the sensor component 814 may also detect the position change of the UE 800 or a component of the UE 800, the presence or absence of contact between the user and the UE 800, the orientation or acceleration/deceleration of the UE 800, and the temperature change of the UE 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the UE 800 and other devices. The UE 800 may access a wireless network based on a communication standard, such as WiFi, 2G or 3G, or a combination thereof. In an example embodiment, the communication component 816 receives a broadcast signal or broadcast-related information from an external broadcast management system via a broadcast channel. In an example embodiment, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an example embodiment, UE 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an example embodiment, a non-transitory computer-readable storage medium including instructions is also provided, such as a memory 804 including instructions, and the instructions may be executed by the processor 820 of the UE 800 to implement the above methods. For example, the non-transitory computer-readable storage medium may be a ROM, a random access memory (RAM), a CD-ROM, a magnetic tape, a floppy disk, an optical data storage device, etc.

As illustrated in FIG. 16, an embodiment of the disclosure illustrates a structure of an access device. For example, the communication device 900 may be provided as a network side device. The communication device may be various network elements such as the aforementioned access network element and/or network function.

As illustrated in FIG. 16, the communication device 900 includes a processing component 922, which further includes one or more processors, and a memory resource represented by a memory 932 for storing instructions that may be executed by the processing component 922, such as an application. The application stored in the memory 932 may include one or more modules each corresponding to a set of instructions. In addition, the processing component 922 is configured to execute instructions to perform any method of the afore-mentioned methods performed by the access device, for example, any method illustrated in any one of FIGS. 4 to 9.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server TM, Mac OS X TM, Unix TM, Linux TM, FreeBSD TM or the like.

In the absence of contradiction, each step in a certain implementation or example may be implemented as an independent example, and the steps may be arbitrarily combined. For example, a solution after removing some steps in a certain implementation or example may also be implemented as an independent example, and the order of the steps in a certain implementation or example may be arbitrarily exchanged. In addition, the optional methods or optional examples in a certain implementation or example may be arbitrarily combined. In addition, the various implementations or examples may be arbitrarily combined. For example, some or all steps of different implementations or examples may be arbitrarily combined, and a certain implementation or example may be arbitrarily combined with the optional methods or optional examples of other implementations or examples.

Those skilled in the art will readily appreciate other implementations of embodiments after considering the specification and practicing the disclosure herein. The disclosure is intended to cover any variations, uses, or adaptations of embodiments, which follow the general principles of the disclosed embodiments and include common knowledge or customary technical means in the art that are not disclosed in the disclosure. The specification and examples are to be considered merely illustrative, and the true scope and spirit of the disclosed embodiments are indicated by the following claims.

It should be understood that the embodiments of the disclosure are not limited to the precise structures described above and shown in the drawings, and various modifications and changes may be made without departing from the scope thereof. The scope of the embodiments of the disclosure is limited only by the appended claims.

## Claims

1. A method for processing information, performed by a network device, the method comprising:
sending a first message to a terminal, wherein the first message is used for instructing the terminal to send a buffer status report (BSR) based on a first type of BSR table or a second type of BSR table.

2. The method of claim 1, wherein sending the first message to the terminal comprises at least one of:
sending a radio resource control (RRC) message comprising the first message to the terminal; or
sending a medium access control (MAC) control element (CE) comprising the first message to the terminal.

3. The method of claim 1 or 2, wherein the first message is used for instructing the terminal to send the BSR based on the first type of BSR table or the second type of BSR table for one or more logical channels (LCs); or
the first message is used for instructing the terminal to send the BSR based on the first type of BSR table or the second type of BSR table for one or more logical channel groups (LCGs).

4. The method of any one of claims 1 to 3, wherein the first message further comprises a logical channel (LC) identifier (ID) or a logical channel group (LCG) ID; and
the first message is used for instructing the terminal to send the BSR based on the first type of BSR table or the second type of BSR table for an LC indicated by the LC ID; or for instructing the terminal to send the BSR based on the first type of BSR table or the second type of BSR table for an LCD indicated by the LCG ID.

5. The method of any one of claims 1 to 4, wherein the first message comprises:
a first information field, wherein the first information field comprises at least one indication bit, the indication bit indicates that the BSR is sent based on the first type of BSR table or the second type of BSR table; or
a second information field, wherein the second information field carries a triggering condition for triggering to send the BSR based on the first type of BSR table and/or the second type of BSR table.

6. The method of any one of claims 1 to 5, wherein sending the first message to the terminal comprises:
receiving a second message sent by the terminal, wherein the second message is used for determining that the terminal sends the BSR based on the first type of BSR table or the second type of BSR table; and
sending the first message to the terminal based on the second message.

7. The method of claim 6, wherein the second message comprises:
first assistance information, wherein the first assistance information indicates that the terminal supports use of the first type of BSR table and/or the second type of BSR table; and/or
second assistance information, wherein the second assistance information indicates that the terminal expects to use the first type of BSR table or the second type of BSR table to send the BSR.

8. A method for processing information, performed by a terminal, the method comprising:
receiving a first message sent by a network device, wherein the first message is used for instructing the terminal to send a buffer status report (BSR) based on a first type of BSR table or a second type of BSR table.

9. The method of claim 8, further comprising:
sending the BSR to the network device based on the first message.

10. The method of claim 8 or 9, wherein the first message comprises: a radio resource control (RRC) message or a medium access control (MAC) control element (CE).

11. The method of any one of claims 8 to 10, wherein the first message is used for instructing the terminal to send the BSR based on the first type of BSR table or the second type of BSR table for one or more logical channels (LCs); or
the first message is used for instructing the terminal to send the BSR based on the first type of BSR table or the second type of BSR table for one or more logical channel groups (LCGs).

12. The method of any one of claims 8 to 11, wherein the first message further comprises a logical channel (LC) identifier (ID) or a logical channel group (LCG) ID; and
the first message is used for instructing the terminal to send the BSR based on the first type of BSR table or the second type of BSR table for an LC indicated by the LC ID; or for instructing the terminal to send the BSR based on the first type of BSR table or the second type of BSR table for an LCD indicated by the LCG ID.

13. The method of any one of claims 8 to 12, wherein the first message comprises:
a first information field, wherein the first information field comprises at least one indication bit, the indication bit indicates that the BSR is sent based on the first type of BSR table or the second type of BSR table; or
a second information field, wherein the second information field carries a triggering condition for triggering to send the BSR based on the first type of BSR table and/or the second type of BSR table.

14. The method of any one of claims 8 to 13, further comprising:
sending a second message to the network device, wherein the second message is used for determining that the terminal sends the BSR based on the first type of BSR table or the second type of BSR table.

15. The method of claim 14, wherein the second message comprises:
first assistance information, wherein the first assistance information indicates that the terminal supports use of the first type of BSR table and/or the second type of BSR table; and/or
second assistance information, wherein the second assistance information indicates that the terminal expects to use the first type of BSR table or the second type of BSR table to send the BSR.

16. A network device, comprising:
a sending module, configured to send a first message to the terminal, wherein the first message is used for instructing the terminal to send a buffer status report (BSR) based on a first type of BSR table or a second type of BSR table.

17. A terminal, comprising:
a receiving module, configured to receive a first message sent by a network device, wherein the first message is used for instructing the terminal to send a buffer status report (BSR) based on a first type of BSR table or a second type of BSR table.

18. A system for processing information, comprising:
a network device, configured to perform the method of any one of claims 1 to 7; and
a terminal, configured to perform the method of any one of claims 8 to 15.

19. A communication device, comprising a processor, a transceiver, a memory and an executable program stored in the memory and capable of being run by the processor, wherein when the executable program is executed by the processor, the method for processing information of any one of claims 1 to 7 or claims 8 to 15 is implemented.

20. A computer storage medium, having an executable program stored therein, wherein after the executable program is executed by a processor, the method for processing information of any one of claims 1 to 7 or claims 8 to 15 is implemented
